(19) Europäisches Patentamt / European Patent Office / Office européen des brevets

(11) **EP 1 595 257 B1**

(12) **EUROPEAN PATENT SPECIFICATION**

(45) Date of publication and mention
of the grant of the patent:
**18.04.2007 Bulletin 2007/16**

(51) Int Cl.:
***G11B 20/00*** *(2006.01)*

(21) Application number: **03704670.3**

(22) Date of filing: **21.02.2003**

(86) International application number:
**PCT/EP2003/001778**

(87) International publication number:
**WO 2004/075184 (02.09.2004 Gazette 2004/36)**

(54) **METHOD FOR EMBEDDING AND DETECTING A WATERMARK IN A DIGITAL AUDIO SIGNAL**

VERFAHREN ZUR EINBETTUNG UND DETEKTION EINES WASSERZEICHENS IN EINEM DIGITALEN AUDIOSIGNAL

PROCEDE D'INCLUSION ET DE DETECTION DE FILIGRANE DANS UN SIGNAL AUDIONUMERIQUE

(84) Designated Contracting States:
**AT BE BG CH CY CZ DE DK EE ES FI FR GB GR HU IE IT LI LU MC NL PT SE SI SK TR**

(43) Date of publication of application:
**16.11.2005 Bulletin 2005/46**

(73) Proprietor: **TELEFONAKTIEBOLAGET LM ERICSSON (publ)**
**164 80 Stockholm (SE)**

(72) Inventors:
• **FÄRBER, Nikolaus**
**91052 Erlangen (DE)**
• **HARTUNG, Frank**
**52134 Herzogenrath (DE)**

(74) Representative: **Tonscheidt, Andreas et al**
**Ericsson GmbH**
**Ericsson Allee 1**
**52134 Herzogenrath (DE)**

(56) References cited:
• **SEUNGWON SHIN ET AL: "A robust audio watermarking algorithm using pitch scaling" DSP 2002, PROCEEDINGS OF 14TH INTERNATIONAL CONFERENCE ON DIGITAL SIGNAL PROCESSING (CAT. NO.02TH8628), 1 - 3 July 2002, pages 701-704 vol.2, XP002256338 SANTORINI, GREECE, Piscataway, NJ, USA, IEEE, USA ISBN: 0-7803-7503-3**
• **KIROVSKI D ET AL: "Audio watermark robustness to desynchronization via beat detection" INFORMATION HIDING. 5TH INTERNATIONAL WORKSHOP, IH 2002. REVISED PAPERS (LECTURE NOTES IN COMPUTER SCIENCE VOL.2578), 7 - 9 October 2002, pages 160-176, XP002256339 NOORDWIKKERHOUT, NETHERLANDS, Berlin, Germany, Springer Verlag, Germany ISBN: 3-540-00421-1**

EP 1 595 257 B1

## Description

This invention relates to a method for embedding and detecting a watermark in a digital audio signal.

It is state of the art to use watermarks in digital rights management for digital media such as video or audio. A watermark is a digital information, which is hidden in the media or host data, such that it is ideally imperceptible but not removable. Hence, it can be used to attach information about the origin, owner, and status of the media. This information can then be used e.g. to trace back the origin of an illegal copy.

The most commonly used technique to embed a watermark into a signal is based on an idea from spread-spectrum radio communications. Here, the embedded watermark is created when a pseudorandom noise sequence with low amplitude is added to the original signal. This added sequence, can then be detected at a later stage with e.g. a correlation receiver or a matched filter. If the parameters of the added sequence, like the amplitude or the sequence length are chosen appropriately, the probability of the detection is very high. If several of such watermarks are embedded consecutively, several bits of information can be conveyed. In general, the higher the number of samples used to embed one bit and the higher the amplitude of the added sequence, the more robust is the watermark against attacks. On the other hand, the watermark becomes audible, when the amplitude is too high and the amount of embedded information is reduced, when the number of samples increases. Hence, there exists a trade-off between robustness, watermark data-rate, and quality see i.o. "A robust audio watermarking algorithm using pitch scaling" from Shin et al. in DSP 2002.

Watermarking techniques, which are based on the spread-spectrum approach, require a rather strict synchronization. If such a synchronization is not maintained, then the detection of embedded information will not be possible anymore. Therefore, synchronization is often considered to be a pre-requirement in prior art solutions.

But exactly this weakness is exploited by so called synchronization attacks, which attempt to break the correlation and make the recovery of the watermark impossible or infeasible. Such attacks can be geometric manipulations, like e.g. zoom, rotation, shearing, cropping, and re-sampling. For audio, known manipulations are the insertion or deletion of single audio samples, like e.g. a jitter attack, sample rate conversion like e.g. linear time-scaling, the extension or shortening of speech pauses, or the pitch-shifting. Since a typical watermark detector has to know the exact position of the embedded data, these attacks are very effective and thus a major problem in the practical application of watermarks in audio signals.

It is therefore an object of the present invention, as claimed in claims 1 and 10, to overcome the above mentioned problems and to provide a method for embedding a watermark in a digital audio signal, where the digital audio signal, which includes several pitch periods and is divided into groups of N samples, comprising the steps of selecting from one of the groups of N samples an input-segment with an input-length, dividing the input-segment into at least two sub-segments, each sub-segment having a length of at least one pitch period, creating a modified-segment with an output-length, wherein at least one of the sub-segments is time-shifted such that in an overlapping zone a correlation value of the two sub-segments is a maximum, and wherein the signal in the overlapping zone is a weighted average of the two sub-segments in said overlapping zone.

Further there is provided a method for detecting a watermark in a received digital audio signal, where the received digital audio signal may include at least one modified-segment, which is modified according to the above embedding method, and comprising the steps of receiving for said at least one modified-segment an $\alpha$-priori information about: the input-segment, the modified-segment, extension-segments and a start point of that modified-segment; generating a first template-signal, which is the input-segment with the extension-segments before and after the input-segment; generating a second template-signal, which is the modified-segment with the extension-segments before and after the modified-segment; creating a first and a second correlation value by comparing the first and second template-signal with the received digital audio signal, and assuming that a watermark is included, if the second correlation value is higher than the first correlation value.

With it, an embedded watermark is more resistant against synchronization attacks, because the watermark is generated in the same manner as such an attack. Any kind of synchronization attack, which is applied before or after the extension-segments, does not degrade the performance of the proposed detection method. Although any known method for detecting a watermark will benefit from the a-priori knowledge of the original signal, the proposed method takes as a direct advantage from this pre-requirement, a higher robustness against synchronization attack.

If the time-shift from said at least one of the sub-segments is equal to a pitch period, the transition between the modified-segment and the neighboring signal-segments is smooth and thus the embedded watermark is less audible.

A further time-shift, from said at least one of the sub-segments, which is equal to a multiple number of the pitch periods, causes a higher difference between the input-length form the input segment and the output-length from the modified segment. Thus the following detection of the embedded watermark in a digital audio signal will become easier, because the difference between the input-segment and the modified-segment is more distinguishable.

If the input-segment is selected from one of the groups of N samples, where consecutive pitch periods are similar, the embedding is less audible. Then, the resulting signal in the overlapping zone, which is a weighted average of the overlapping sub-segments, varies only slightly from these pitch periods before and after the overlapping zone. This causes that the modification is less audible.

Selecting the input-segment from the mid of one of the groups of N samples or depending on a pre-defined secret key, causes that the start point of the modified segment is known, which simplifies the following detection method.

If the principle of the present embedding method is repeated for several input-segments, where the output-length from each of the respective modified-segments is different, a higher modulation level can be achieved and thus more information can be included in the modified digital audio signal. Then, according to the number of different modified-segments, a corresponding number of different template signals for the detection method have to be generated.

If the length of the extension-segments is in the range from 10ms to 40ms, it is supposed that within that range the audio signal is approximately stationary. Hence, the template-signals are distinguishable and detection is always robust enough.

Further features and advantages of the present invention will be apparent to those skilled in the art from further dependent claims and the following detailed description, taken together with the accompanying figures, where:

Fig.1   shows an input-segment with a first and second sub-segment according to a first embodiment;

Fig.2   shows an output-segment according to the first embodiment;

Fig.3   shows an input-segment with a first and second sub-segment according to a second embodiment;

Fig.4   shows an output-segment according to the second embodiment;

Fig.5   shows an input- and an output-segment according to a further embodiment;

Fig.6   shows template-signals for the detection of a watermark in a digital audio signal.

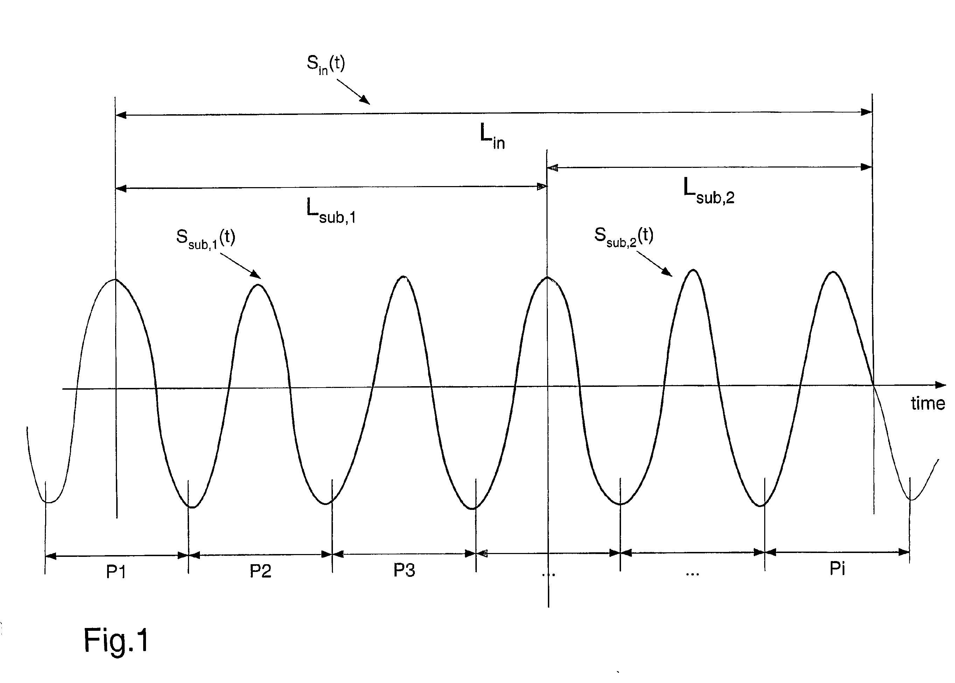

In the time domain, digital audio signals are divided into groups of N samples. This is already known to those skilled in the art and thus not described in more detail. The embedding and detecting method according to the present invention applies to parts of such groups of N samples. Figure 1 shows an input-segment $s_{in}(t)$, which is selected from one of the groups of N samples from the digital audio signal. The digital audio signal having a number of consecutive pitch periods P1, P2, P3, ...,

Pi, each characterizing a part of the input-segment $s_{in}(t)$ with a similar waveform.

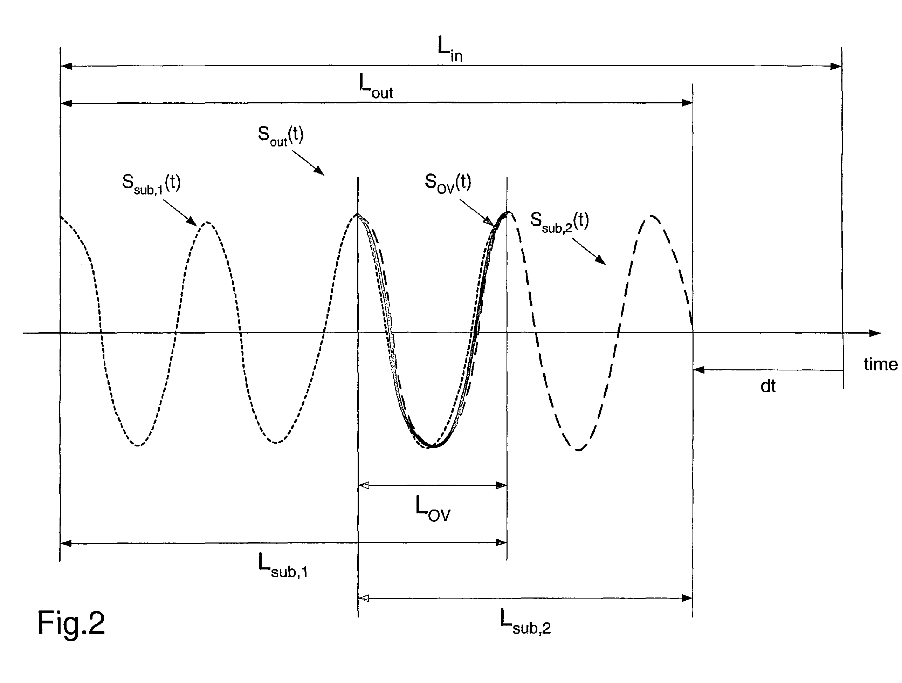

The input-segment $s_{in}(t)$, with a length $L_{in}$, is divided into two sub-segments $s_{sub,1}(t)$ and $s_{sub,2}(t)$, with a respective length $L_{sub,1}$ and $L_{sub,2}$ respectively. Each of the sub-segments, $s_{sub,1}(t)$ and $s_{sub,2}(t)$, includes at least one complete pitch period Pi. In the shown embodiment, the sub-segment $s_{sub,2}(t)$ directly follows after the sub-segment $s_{sub,1}(t)$. As shown in Fig. 2, for creating a modified segment $s_{out}(t)$, the second sub-segment $s_{sub,2}(t)$ is time-shifted towards the first sub-segment $s_{sub,1}(t)$. The amount of the time shift dt is determined by the requirement, that in a resulting overlapping zone $L_{ov}$ the correlation value for signals of the two sub-segments $s_{sub,1}(t)$ and $s_{sub,2}(t)$ is a maximum. For the overlapping zone $L_{ov}$, then, a signal $s_{ov}(t)$ is calculated. The calculation is based on a weighted average of the two sub-segments $s_{sub,1}(t)$ and $s_{sub,2}(t)$ in said overlapping zone. Hence, a smooth transition between the signal from the unmodified parts of the sub-segments and the signal $s_{ov}(t)$ from the overlapping zone is achieved. Different embodiments for calculating a weighted average signal from two overlapping signals are well known to those skilled in the art and thus are not described here in more detail. In the present described embodiment, the time-shift dt is exactly one pitch period Pi, because only then a maximum correlation for the two overlapping sub-segments $s_{sub,1}(t)$ and $s_{sub,2}(t)$ is achieved within the overlapping zone. With it, and with the creation of the signal $s_{ov}(t)$ as a weighted average, the modified-segment and hence the embedded watermark is less audible in the digital audio signal.

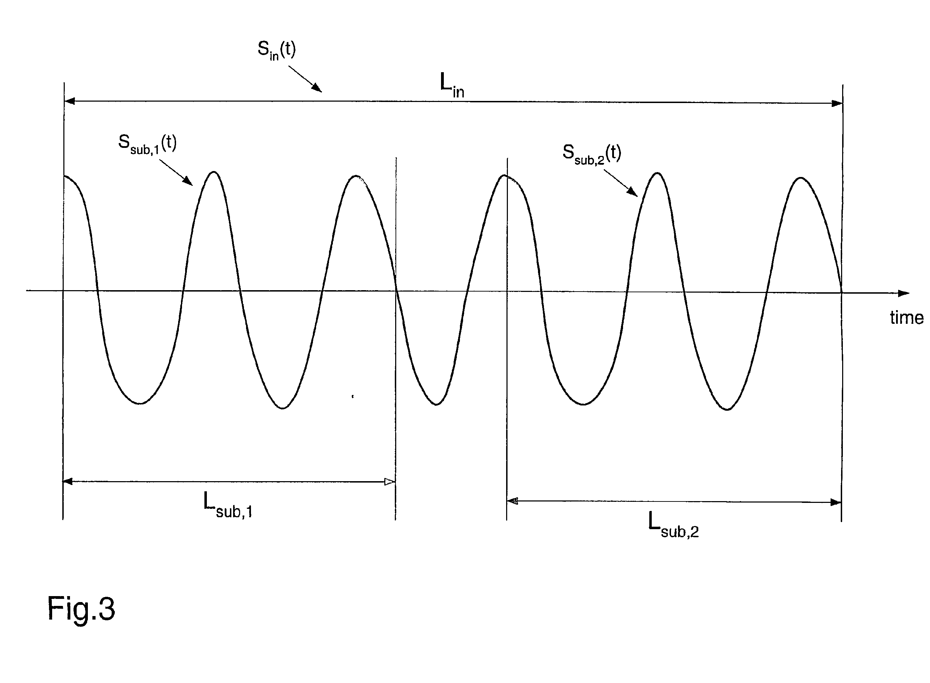

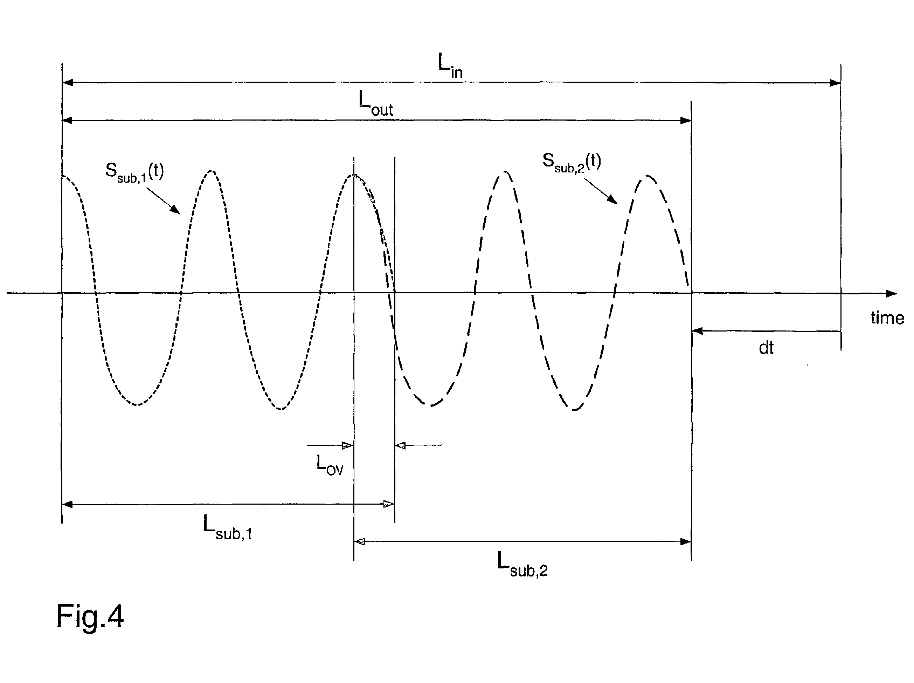

Fig.3 shows a further possible embodiment of an input-segment $s_{in}(t)$ from a digital audio signal. Here, the two sub-segments $s_{sub,1}(t)$ and $s_{sub,2}(t)$ are arranged such that a part of the input-signal $s_{in}(t)$ is not included in one of the two sub-segments $s_{sub,1}(t)$ and $s_{sub,2}(t)$. For embedding the watermark, the two sub-segments $s_{sub,1}(t)$ and $s_{sub,2}(t)$ have to be rearranged on the time axis such that an overlapping zone, as shown in Fig. 4, is created. As already shown in the first embodiment, also in the present embodiment, the time-shift dt leads to a contraction of the output length Lout of the modified segment $s_{out}(t)$ compared to the input-length $L_{in}$ of the input-segment $s_{in}(t)$. Therefore, for creating the modified segment $s_{out}(t)$, the second sub-segment $s_{sub,2}(t)$ is time-shifted towards the first sub-segment $s_{sub,1}(t)$. The value of the time shift dt is also determined by the before described requirement, that in the overlapping zone $L_{ov}$, the correlation value of the two sub-segments $s_{sub,1}(t)$ and $s_{sub,2}(t)$ has to be a maximum. Finally, the signal $s_{ov}(t)$ is calculated for the overlapping zone $L_{ov}$, which is the weighted average of the parts from the two overlapping sub-segments $s_{sub,1}(t)$ and $s_{sub,2}(t)$ in said overlapping zone $L_{ov}$.

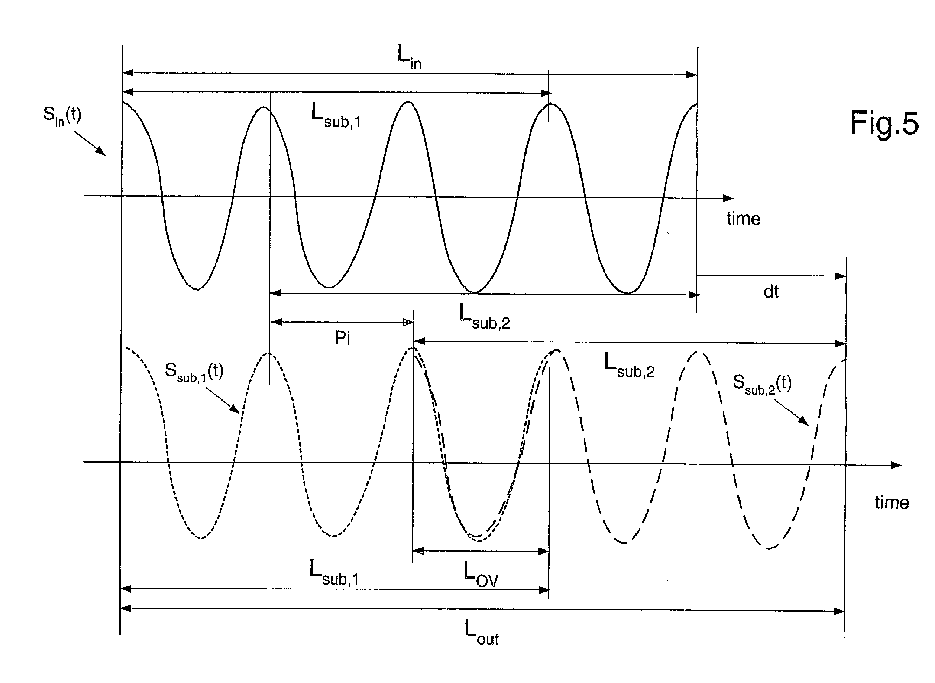

Fig. 5 shows a further embodiment according to the present invention. Contrary to the described embodiments before, here, the output-length Lout of the

modified-segment $s_{out}(t)$ is extended, compared to the input-length $L_{in}$ of the input-segment $si_n(t)$. Therefore, it is necessary that the input-segment $si_n(t)$ is divided in such a manner, that the two sub-segments $s_{sub,1}(t)$ and $s_{sub,2}(t)$ are overlapping with more than one pitch period Pi. Then the requirement can be fulfilled, that after the time-shift dt the correlation value in the remaining overlapping zone $L_{ov}$ reaches a maximum. For the modified-segment $s_{out}(t)$, the resulting signal $s_{ov}(t)$ in the overlapping zone $L_{ov}$ is created as already described in respect to the before described embodiments.

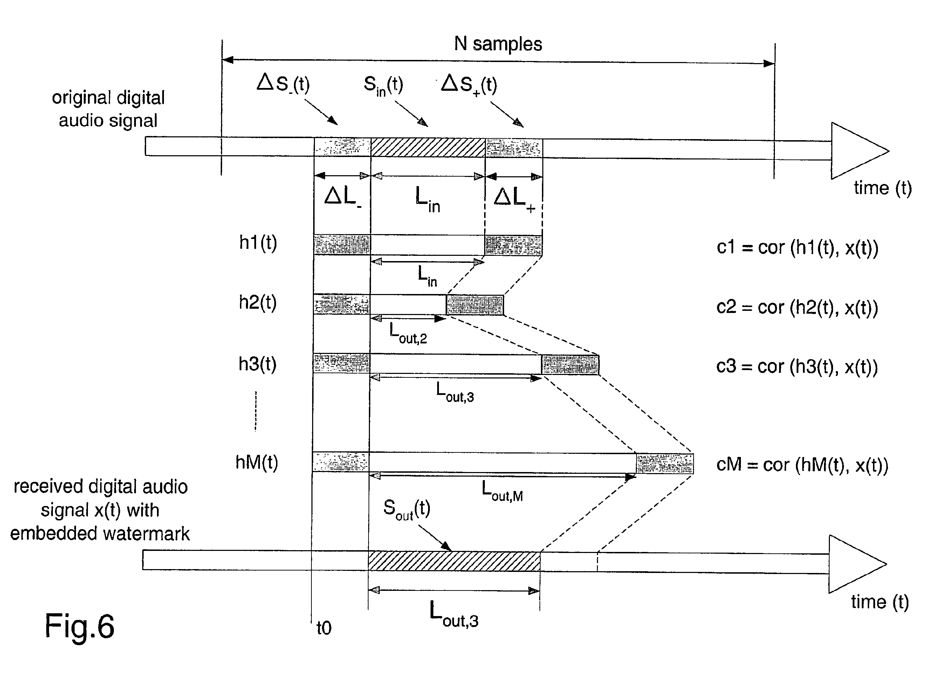

Now, with reference to Fig. 6, the method for detecting the embedded watermark in a received digital audio signal is described in more detail. A requirement for the present detection method is, that information from the original digital audio signal and the embedding method are known a-priori. This information is: the input-segment $s_{in}(t)$, the modified segment $s_{out}(t)$ and the start point t0 of the modified segment. Further, extension-segments $\Delta S_+(t)$, $\Delta S_-(t)$ are defined from the digital audio signal. The extension-segment $\Delta S_-(t)$ is a part of the digital audio signal before the input segment $s_{in}(t)$, having the length $\Delta L_-$. The extension-segment $\Delta S_+(t)$, with the length $\Delta L_+$, is a part of the digital audio signal after the input segment $s_{in}(t)$. Based on the input-segment $s_{in}(t)$, the modified segment $s_{out}(t)$ and the extension-signals $\Delta S_+(t)$, $\Delta S_-(t)$ several template-signals $hm(t) = h1(t), h2(t), h3(t),..., hM(t)$ are generated. These template-signals are further used for the detection of the modified segment $s_{out}(t)$ and hence the embedded watermarks within the received digital audio signal. Therefore a first template-signal h1(t) is generated from the input-segment $s_{in}(t)$ and the extension-segments before $\Delta S_-(t)$ and after $\Delta S_+(t)$ that input-segment $s_{in}(t)$. A second template-signal h2(t) is generated from the modified-segment $s_{out}(t)$ and the extension-segments before $\Delta S_-(t)$ and after $\Delta S_+(t)$ that modified-segment $s_{out}(t)$. The extension-segment $\Delta S_-(t)$ before the input-segment $s_{in}(t)$ and the modified-segment $s_{out}(t)$ is the identical signal segment and is directly taken from the original audio signal before embedding the watermark. The same applies to the extension segment $\Delta S_+(t)$ after the input-segment $s_{in}(t)$ and the respective modified-segment $s_{out}(t)$. Then, the received digital audio signal is compared with these first h1(t) and second h2(t) template-signals. Based on the comparison of the received audio signal with the first template-signal h1(t), a first correlation value c1 is created. A second correlation value c2 is created in the same way from the comparison of the received digital audio signal with the second template-signal h2(t). These correlation values, c1 and c2, then give an indication whether a modified-segment is embedded in the received digital audio signal. In more detail, if the second correlation value c2 is higher than the first one c1, it is assumed that a modified-segment $s_{out}(t)$, and thus a watermark, is included in the received digital audio signal. Contrary, if the first correlation value c1 is higher, it is assumed that no watermark is included. Further, in Fig.6, there is shown a third template signal h3(t). This can be used, if a watermark with a higher modulation level is embedded in the audio signal. In the present embodiment, the second template-.signal h2(t) includes a contracted segment, whereas the third template h3 (t) signal includes an expanded segment. Although the beforehand described embodiment is described with three template-signals, a person skilled in the art would recognize that much higher modulation levels can be achieved when the present invention is applied to several m=1,2,3,...,M input-segments $s_{in,m}(t)$, where the output-length $L_{out,m}$ from each of the respective modified-segments $s_{out,m}(t)$ is different. Then, according to the number M of different modified-segments $s_{out,m}(t)$, a corresponding number of different template signals hm(t) and correlation values cM for the detection are needed. With it more information can be included and detected in the modified digital audio signal. If for example M=4 different modified-segments are used, then in a group of N samples a 2-bit information (= ld(M)) can be transmitted. In the easiest manner, different output-lengths $L_{out,m}$ from each of the respective modified-segments $s_{out,m}(t)$ can be achieved through the insertion and deletion of multiple pitches.

The main scope of the present invention, which has been described beforehand based on different embodiments, is to achieve a watermarking method, which has a higher resistance against synchronization attacks. Moreover the proposed method is also usable for added noise and other signal processing techniques, like filtering, which do not effect the synchronization. At least the same robustness as for spread-spectrum watermarks is expected. Furthermore, also compression techniques should not be problematic. This increased robustness is possible, because all these attacks usually do not change the number of pitches in the digital audio signal, where the proposed watermark is embedded. Furthermore, a simple jitter attack that inserts or deletes single sample, is not expected to be problematic. Even a slight shift still yields a high cross-correlation between the two waveforms, as long as the number of inserted or deleted samples is not too high. Even in that case, the proposed detection method can be repeated using different length of the modified segments. Considering pitch-shifting attacks, which are usually the most problematic attacks for watermarks, it is obvious that any scaling and shifting that is applied outside the template region should not affect the detection performance. If the input segment is positioned at to and no modifications are made to any samples within the range $(t_0 - \Delta L_-) < t < (t_0 + \Delta L_+ + L_{OUT})$, then the detection performance will not be affected. Only if an additional pitch-shift is performed within the template region by an attack, the correlation detector may be misled and may not detect the watermark correctly. However, if the length $\Delta L_-$ and $\Delta L_+$ from the extension segments $\Delta S_+(t)$, $\Delta S_-(t)$ can be kept reasonably short, e.g., corresponding to 40 ms, then a pitch-shifting attack has to be applied every 80 ms to remove the watermark with a high probability. Hence, the scheme can be designed to embed one watermark bit every N samples and provide robustness as long as additional pitch-shifts are inserted less frequently than every $((\Delta L_-) + (\Delta L_+))$ sample. Assuming that $(\Delta L_-) + (\Delta L_+) << N$, we can design the scheme such that the embedding is imperceptible but the attempt to remove the watermark results in audible distortions.

**Claims**

1. A method for embedding a watermark in a digital audio signal, the digital audio signal, which includes several pitch periods (Pi), is divided into groups of N samples, **the method comprising the steps of:**

    - selecting from one of the groups of N samples an input-segment ($s_{in}(t)$) with an input-length ($L_{in}$),
    - dividing the input-segment ($s_{in}(t)$) into at least two sub-segments (($s_{sub,1}(t)$, ($s_{sub,2}(t)$), each sub-segment (($s_{sub,1}(t)$, ($s_{sub,2}(t)$) having a length ($L_{sub,1}, L_{sub,2}$) of at least one pitch period (Pi),
    - creating a modified-segment ($s_{out}(t)$) with an output-length ($L_{out}$), wherein at least one of the sub-segments (($s_{sub,1}(t)$, ($s_{sub,2}(t)$) is time-shifted (dt) such that in an overlapping zone ($L_{ov}$) a correlation value of the two sub-segments (($s_{sub,1}(t)$, ($s_{sub,2}(t)$) is a maximum, and wherein the signal ($s_{ov}(t)$) in the overlapping zone ($L_{ov}$) is a weighted average of the two sub-segments (($s_{sub,1}(t)$, ($s_{sub,2}(t)$) in said overlapping zone.

2. The method according to claim 1
   **characterized in that**
   the output-length (Lout) is contracted compared to the input-length ($L_{in}$).

3. The method according to claim 1
   **characterized in that**

    - the input-segment ($s_{in}(t)$) is divided such that the at least two sub-segments (($s_{sub,1}(t)$, ($s_{sub,2}(t)$) are overlapping with at least two pitch periods (Pi), and
    - the output-length (Lout) is extended compared to the input-length ($L_{in}$).

4. The method according to any of the claims 1-3,
   **characterized in that**
   the time-shift (dt) from said at least one of the sub-segments (($s_{sub,1}(t)$, ($s_{sub,2}(t)$)) is equal to one period (Pi).

5. The method according to any of the claims 1-3,
   **characterized in that**
   the time-shift (dt) from said at least one of the sub-segments (($s_{sub,1}(t)$, ($s_{sub,2}(t)$)) is equal to a multiple number of the pitch periods (Pi).

6. The method according to any of the claims 1-5,
   **characterized in that**
   the input-segment ($s_{in}(t)$) is selected at a position in the group of N samples, where consecutive pitch periods (Pi) are similar.

7. The method according to any of the claims 1-6,
   **characterized in that**
   the input-segment ($s_{in}(t)$) is selected from the mid of the group of N samples.

8. The method according to any of the claims 1-6,
   **characterized in that**
   the input-segment ($s_{in}(t)$) is selected depending on a pre-defined secret key.

9. The method according to any of the previous claims 1-8
   **characterized in that**
   the steps are repeated for several (m=1,2,...,M) input-segments ($s_{in,m}(t)$), wherein the output-length ($L_{out,m}$) from each of the respective modified-segments ($s_{out,m}(t)$) is different.

10. A method for detecting a watermark in a received digital audio signal (x(t)), the received digital audio signal (x(t)) may include at least one modified-segment ($s_{out}(t)$), which is modified according to one of the claims 1-9,
    the method comprising the steps of:

    - receiving for said at least one modified-segment ($s_{out,m}(t)$) an a-priori information about: the input-segment ($s_{in,m}(t)$), the modified-segment ($s_{out,m}(t)$), extension-segments ($\Delta S_+(t)$, $\Delta S_-(t)$) and a start point (t0) of that modified-segment ($s_{out,m}(t)$),
    - generating a first template-signal (h1(t)), which is the input-segment with the extension-segments before ($\Delta S_-(t)$) and after ($\Delta S_+(t)$) the input-segment ($s_{in}(t)$),
    - generating a second template-signal (h2(t)), which is the modified-segment with the extension-segments before ($\Delta S_-(t)$) and after ($\Delta S_+(t)$) the modified-segment ($s_{out}(t)$),
    - creating a first (c1) and a second (c2) correlation value by comparing the first (h1(t)) and second (h2(t)) template-signal with the received digital audio signal (x(t)),
    - and assuming that a watermark is included, if the second correlation value (c2) is higher than the first correlation value (c1).

11. The method according to claim 10,
    **characterized in that**

- the generation of said second template-signal (h2(t)) is divided into the steps of:

-- generating the second template-signal (h2(t)), which is a contracted segment with the extension segments before ($\Delta S_-$(t)) and after ($\Delta S_+$(t)) the modified-segment ($s_{out}$(t)), and

-- generating a third template-signal (h3(t)), which is an expanded segment with the extension segments before ($\Delta S_-$(t)) and after ($\Delta S_+$(t)) the modified-segment ($s_{out}$(t));

- then the first (c1), the second (c2) and a third (c3) correlation value are created, wherein the third correlation value is created by comparing the third (h3(t)) template-signal with the received digital audio signal (x(t));

- and then it is assumed that a contracted watermark is included, if the second (c2) correlation value is higher than the first (c1) and third (c3) correlation value or that an extended watermark is included if the third (c3) correlation value is higher than the first (c1) and second (c2) correlation value.

12. The method according to the previous claims 10 and 11,
**characterized in that**
the steps are repeated for several (m=1,2,...,M) input-segments ($s_{in,m}$(t)), wherein the output-length ($L_{out,m}$) from each of the respective modified-segments ($s_{out,m}$(t)) is different.

13. The method according to any of the claims 10-12,
**characterized in that**

- the length ($\Delta L_-$, $\Delta L_+$) of the extension-segments ($\Delta S_-$(t), $\Delta S_+$(t)) are in the range of 10ms to 40ms.

14. The method according to any of the claims 10-13,
**characterized in that**

- the length ($\Delta L_-$, $\Delta L_+$) fulfills the condition

$$(\Delta L_-) + (\Delta L_+) \ll N,$$

where N is the number of samples in a group.

**Patentansprüche**

1. Verfahren zum Einbetten eines Wasserzeichens in ein digitales Audiosignal, wobei das Audiosignal, das mehrere Tonhöhen-Perioden (Pi) umfasst, in Gruppen von N Abtastwerten unterteilt ist,

wobei das Verfahren die folgenden Schritte umfasst:

- Auswählen eines Eingangssegments ($s_{in}$(t)) mit einer Eingangslänge ($L_{in}$) aus einer der Gruppen von N Abtastwerten,
- Unterteilen des Eingangssegments ($s_{in}$(t)) in wenigstens zwei untergeordnete Segmente (($s_{sub,1}$(t), ($s_{sub,2}$(t)), wobei jedes untergeordnete Segment (($s_{sub,1}$(t), ($s_{sub,2}$(t)) eine Länge ($L_{sub,1}$, $L_{sub,2}$) von wenigstens einer Tonhöhen-Periode (Pi) aufweist,
- Erzeugen eines modifizierten Segments ($s_{out}$ (t)) mit einer Ausgangslänge ($L_{out}$), wobei wenigstens eines der untergeordneten Segmente (($s_{sub,1}$(t), ($s_{sub,2}$(t)) so zeitversetzt (dt) ist, dass in einer überlappenden Zone ($L_{ov}$) ein Korrelationswert der zwei untergeordneten Segmente (($s_{sub,1}$(t), ($s_{sub,2}$(t)) ein Maximum ist, und wobei das Signal ($s_{ov}$(t)) in der überlappenden Zone ($L_{ov}$) ein gewichteter Mittelwert der zwei untergeordneten Segmente (($s_{sub,1}$(t), ($s_{sub,2}$(t)) in der überlappenden Zone ist.

2. Verfahren nach Anspruch 1,
**dadurch gekennzeichnet, dass**
die Ausgangslänge ($L_{out}$) im Vergleich zur Eingangslänge ($L_{in}$) zusammengezogen ist.

3. Verfahren nach Anspruch 1,
**dadurch gekennzeichnet, dass**

- das Eingangssegment ($s_{in}$(t)) so unterteilt ist, dass sich wenigstens zwei untergeordnete Segmente (($s_{sub,1}$(t), ($s_{sub,2}$(t)) mit wenigstens zwei Tonhöhen-Perioden (Pi) überlappen, und
- die Ausgangslänge ($L_{out}$) im Vergleich zur Eingangslänge ($L_{in}$) erweitert ist.

4. Verfahren nach irgendeinem der Ansprüche 1 - 3,
**dadurch gekennzeichnet, dass**
die Zeitversetzung (dt) von dem wenigstens einen der untergeordnete Segmente (($s_{sub,1}$(t), ($s_{sub,2}$(t)) gleich einer Periode (Pi) ist.

5. Verfahren nach irgendeinem der Ansprüche 1 - 3,
**dadurch gekennzeichnet, dass**
die Zeitversetzung (dt) von dem wenigstens einen der untergeordnete Segmente (($s_{sub,1}$(t) ($s_{sub,2}$(t)) gleich einer mehrfachen Zahl der Tonhöhen-Periode (Pi) ist.

6. Verfahren nach irgendeinem der Ansprüche 1 - 5,
**dadurch gekennzeichnet, dass**
das Eingangssegment ($s_{in}$(t)) an einer Position in der Gruppe von N Abtastwerten ausgewählt wird, an der sich aufeinander folgende Tonhöhen-Perioden (Pi) ähnlich sind.

**7.** Verfahren nach irgendeinem der Ansprüche 1 - 6,
**dadurch gekennzeichnet, dass**
das Eingangssegment ($s_{in}(t)$) aus der Mitte der Gruppe von N Abtastwerten ausgewählt wird.

**8.** Verfahren nach irgendeinem der Ansprüche 1 - 6,
**dadurch gekennzeichnet, dass**
das Eingangssegment ($s_{in}(t)$) abhängig von einem vordefinierten geheimen Schlüssel ausgewählt wird.

**9.** Verfahren nach irgendeinem der Ansprüche 1 - 8,
**dadurch gekennzeichnet, dass**
die Schritte für mehrere (m = 1, 2, ..., M) Eingangssegmente ($s_{in,m}(t)$) wiederholt werden, wobei die Ausgangslänge ($L_{out,m}$) von jedem der jeweiligen modifizierten Segmente ($s_{out,m}(t)$) unterschiedlich ist.

**10.** Verfahren zum Erkennen eines Wasserzeichens in einem empfangenen digitalen Audiosignal ($x(t)$), wobei das empfangene digitale Audiosignal ($x(t)$) wenigstens ein modifiziertes Segment ($s_{out}(t)$) enthalten kann, das nach einem der Ansprüche 1 - 9 modifiziert worden ist,
wobei das Verfahren die folgenden Schritte umfasst:

- für das wenigstens eine modifizierte Segment ($s_{out,m}(t)$) Empfangen von A-priori-Informationen über: das Eingangssegment ($s_{in,m}(t)$), das modifizierte Segment ($s_{out,m}(t)$), Erweiterungssegmente ($\Delta S_+(t)$, $\Delta S_-(t)$) und einen Anfangspunkt ($t0$) dem modifizierten Segment ($s_{out,m}(t)$),
- Generieren eines ersten Maskensignals ($h1(t)$), welches das Eingangssegment ist mit den Erweiterungssegmenten vor ($\Delta S_-(t)$ und nach ($\Delta S_+(t)$) dem Eingangssegment ($s_{in}(t)$),
- Generieren eines zweiten Maskensignals ($h2(t)$), welches das modifizierte Segment ist mit den Erweiterungssegmenten vor ($\Delta S_-(t)$ und nach ($\Delta S_+(t)$) des modifizierten Segments ($s_{out}(t)$),
- Erzeugen eines ersten ($c1$) und eines zweiten ($c2$) Korrelationswerts durch Vergleichen des ersten ($h1(t)$) und zweiten ($h2(t)$) Maskensignals mit dem empfangenen digitalen Audiosignal ($x(t)$),
- und Annehmen, dass ein Wasserzeichen enthalten ist, wenn der zweite Korrelationswert ($c2$) höher ist als der erste Korrelationswert ($c1$).

**11.** Verfahren nach Anspruch 10,
**dadurch gekennzeichnet, dass**

- die Generierung des zweiten Maskensignals ($h2(t)$) in die folgenden Schritte unterteilt ist:

- Generieren des zweiten Maskensignals ($h2(t)$), welches ein zusammengezogenes Segment ist mit den Erweiterungssegmenten vor ($\Delta S_-(t)$ und nach ($\Delta S_+(t)$) dem modifizierten Segment ($s_{out}(t)$),
- Generieren eines dritten Maskensignals ($h3(t)$), das ein erweitertes Segment ist mit den Erweiterungssegmenten vor ($\Delta S_-(t)$ und nach ($\Delta S_+(t)$) dem modifizierten Segment ($s_{out}(t)$);

- dann werden der erste ($c1$), der zweite ($c2$) und ein dritter ($c3$) Korrelationswert erzeugt, wobei der dritte Korrelationswert durch Vergleichen des dritten ($h3(t)$) Maskensignals mit dem empfangenen digitalen Audiosignal ($x(t)$ erzeugt wird;
- und dann wird angenommen, dass ein zusammengezogenes Wasserzeichen enthalten ist, wenn der zweite ($c2$) Korrelationswert höher ist als der erste ($c1$) und dritte ($c3$) Korrelationswert, oder dass ein erweitertes Wasserzeichen enthalten ist, wenn der dritte ($c3$) Korrelationswert höher ist als der erste ($c1$) und zweite ($c2$) Korrelationswert.

**12.** Verfahren nach den vorhergehenden Ansprüchen 10 und 11,
**dadurch gekennzeichnet, dass**
die Schritte für mehrere (m = 1, 2, ..., M) Eingangssegmente ($s_{in,m}(t)$) wiederholt werden, wobei die Ausgangslänge ($L_{out,m}$) von jedem der jeweiligen modifizierten Segmente ($s_{out,m}(t)$) unterschiedlich ist.

**13.** Verfahren nach irgendeinem der Ansprüche 10 - 12,
**dadurch gekennzeichnet, dass**
die Länge ($\Delta L_-$, $\Delta L_+$,) der Erweiterungssegmente ($\Delta S_-(t)$, $\Delta S_+(t)$) im Bereich von 10 ms bis 40 ms liegt.

**14.** Verfahren nach irgendeinem der Ansprüche 10 - 13,
**dadurch gekennzeichnet, dass**
die Länge ($\Delta L_-$, $\Delta L_+$) die Bedingung

$$(\Delta L_-) \; + \; (\Delta L_+) \; << \; N$$

erfüllt, wobei N die Zahl der Abtastwerte in einer Gruppe ist.

**Revendications**

**1.** Procédé pour incorporer une filigrane numérique dans un signal audio numérique, le signal audio numérique, qui inclut plusieurs périodes de hauteur du son ($Pi$), étant divisé en groupes de N échantillons, le procédé comprenant les étapes consistant à :

- sélectionner à partir d'un des groupes de N échantillons un segment d'entrée ($s_{in}(t)$) avec une longueur d'entrée ($L_{in}$),
- diviser le segment d'entrée ($s_{in}(t)$) en au moins deux sous-segments (($s_{sub}$,1(t), ($s_{sub,2}(t)$), chaque sous-segment (($s_{sub}$,1(t), ($s_{sub,2}(t)$) ayant une longueur ($L_{sub}$, 1, $L_{sub}$,2) d'au moins une période de hauteur du son (Pi),
- créer un segment modifié ($S_{out}(t)$) avec une longueur de sortie ($L_{out}$), moyennant quoi au moins un des sous-segments (($s_{sub,1}(t)$, ($s_{sub,2}(t)$) est décalé temporellement (dt) de telle sorte que dans une zone de superposition ($L_{ov}$) une valeur de corrélation des deux sous-segments (($s_{sub,1}(t)$, ($s_{sub,2}(t)$) soit un maximum et moyennant quoi le signal ($s_{ov}(t)$) dans la zone de superposition ($L_{ov}$) est une moyenne pondérée des deux sous-segments (($s_{sub,1}(t)$, ($s_{sub,2}(t)$) dans ladite zone de superposition.

2. Procédé selon la revendication 1,
**caractérisé en ce que**
la longueur de sortie ($L_{out}$) est contractée comparée à la longueur d'entrée ($L_{in}$) .

3. Procédé selon la revendication 1,
**caractérisé en ce que**

- le segment d'entrée ($s_{in}(t)$) est divisé de telle sorte que au moins deux sous-segments (($s_{sub}$,1 (t), ($s_{sub}$,2 (t)) se superposent avec au moins deux périodes de hauteur du son (Pi), et
- la longueur de sortie (Lout) est étendue comparée à la longueur d'entrée ($L_{in}$) .

4. Procédé selon l'une quelconque des revendications 1 à 3,
**caractérisé en ce que**
le décalage temporel (dt) à partir d'au moins un des sous-segments (($s_{sub}$,1(t), ($s_{sub}$,2 (t)) est égal à une période (Pi).

5. Procédé selon l'une quelconque des revendications 1 à 3,
**caractérisé en ce que**
le décalage temporel (dt) à partir dudit au moins un des sous-segments (($s_{sub}$,1 (t), ($s_{sub}$,2 (t)) est égal à un nombre multiple des périodes de hauteur du son (Pi).

6. Procédé selon l'une quelconque des revendications 1 à 5,
**caractérisé en ce que**
le segment d'entrée ($s_{in}(t)$) est sélectionné à une position dans le groupe de N échantillons, où des périodes de hauteur du son (Pi) consécutives sont similaires.

7. Procédé selon l'une quelconque des revendications 1 à 6,
**caractérisé en ce que**
le segment d'entrée ($s_{in}(t)$) est sélectionné à partir du milieu du groupe de N échantillons.

8. Procédé selon l'une quelconque des revendications 1 à 6,
**caractérisé en ce que**
le segment d'entrée ($s_{in}(t)$) est sélectionné en fonction d'une clé secrète prédéfinie.

9. Procédé selon l'une quelconque des revendications précédentes 1 à 8,
**caractérisé en ce que**
les étapes sont répétées pour plusieurs (m=1,2,..., M) segments d'entrée ($s_{in,m}(t)$), moyennant quoi la longueur de sortie ($L_{out,m}$) de chacun des segments modifiés respectifs ($s_{out,m}(t)$) est différente.

10. Procédé pour détecter une filigrane numérique dans un signal audio numérique reçu (x(t)), le signal audio numérique reçu (x(t)) pouvant inclure au moins un segment modifié ($s_{out}(t)$) qui est modifié selon une des revendications 1 à 9,
le procédé comprenant les étapes consistant à :

- recevoir pour au moins un dit segment modifié ($s_{out,m}$ (t)) une information a priori concernant : le segment d'entrée (sin,m(t)), le segment modifié(sout,m(t)), des segments d'extension ($\Delta S+(t)$, $\Delta S-(t)$) et un point de démarrage (t0) de ce segment modifié (sout,m(t)),
- générer un premier signal modèle (h1(t)), qui est le segment d'entrée avec les segments d'extension avant ($\Delta S-(t)$) et après (($\Delta S+(t)$) le segment d'entrée (sin(t)),
- générer un second signal modèle (h2(t)), qui est le segment modifié avec les segments d'extension avant ($\Delta S-(t)$) et après (($\Delta S+(t)$) le segment modifié (sout,m(t)),
- créer une première (c1) et une seconde (c2) valeur de corrélation en comparant le premier (h1 (t)) et le second (h2(t)) signal modèle avec le signal audio numérique reçu (x(t)),
- et postuler que une filigrane numérique est incorporée, si la seconde valeur de corrélation (c2) est supérieure à la première valeur de corrélation (c1) .

11. Procédé selon la revendication 10,
**caractérisé en ce que**

- la génération dudit second signal modèle (h2 (t)) est divisée en étapes consistant à :

-- générer le second signal modèle (h2(t)), qui est un segment contracté avec les segments d'extension avant ($\Delta$S-(t)) et après (($\Delta$S+(t)) le segment modifié ($S_{out,m}$(t)) et
-- générer un troisième signal modèle (h3 (t)), qui est un segment étendu avec les segments d'extension avant ($\Delta$S-(t)) et après (($\Delta$S+(t)) le segment modifié ($s_{out,m}$(t)) ;

- puis, la première (c1), la seconde (c2) et une troisième (c3) valeur de corrélation sont créées, moyennant quoi la troisième valeur de corrélation est crée en comparant le troisième signal modèle (h3(t)) avec le signal audio numérique reçu (x(t));
- et il est ensuite postulé qu'une filigrane numérique contractée est incorporée, si la seconde (c2) valeur de corrélation est supérieure à la première (c1) et la troisième (c3) valeur de corrélation ou qu'une filigrane numérique étendue est incorporée si la troisième (c3) valeur de corrélation est supérieure à la première (c1) et la seconde (c2) valeur de corrélation.

**12.** Procédé selon les revendications précédentes 10 et 11,
**caractérisé en ce que**
les étapes sont répétées pour plusieurs segments d'entrée (m=1,2,...,M), moyennant quoi la longueur de sortie ($L_{out,m}$) de chacun des segments modifiés respectifs ($s_{out,m}$(t)) est différente.

**13.** Procédé selon l'une quelconque des revendications 10 à 12, **caractérisé en ce que**

- la longueur ($\Delta$L-, $\Delta$L+) des segments d'extension ($\Delta$S-(t),$\Delta$S+(t)) est dans la plage de 10ms à 40ms.

**14.** Procédé selon l'une quelconque des revendications 10 à 13,
**caractérisé en ce que**

- la longueur ($\Delta$L-, $\Delta$L+) remplit la condition

$$(\Delta L-) + (\Delta L+) << N,$$

où N est le nombre des échantillons dans un groupe.

Fig.1

Fig.2

EP 1 595 257 B1

Fig.3

EP 1 595 257 B1

Fig.4

EP 1 595 257 B1

Fig.5

$c1 = \mathrm{cor}\,(h1(t),\, x(t))$

$c2 = \mathrm{cor}\,(h2(t),\, x(t))$

$c3 = \mathrm{cor}\,(h3(t),\, x(t))$

$cM = \mathrm{cor}\,(hM(t),\, x(t))$

time (t)

time (t)

N samples

original digital audio signal

received digital audio signal x(t) with embedded watermark

$\Delta S_+(t)$

$S_{in}(t)$

$\Delta S_-(t)$

$\Delta L_+$

$L_{in}$

$\Delta L_-$

$L_{in}$

$L_{out,2}$

$L_{out,3}$

$L_{out,M}$

$S_{out}(t)$

$L_{out,3}$

h1(t)

h2(t)

h3(t)

hM(t)

t0

Fig.6

15